# EUROPÄISCHE PATENTSCHRIFT

(11) **EP 1 129 304 B1**
(45) Veröffentlichungstag und Bekanntmachung des Hinweises auf die Patenterteilung: **31.03.2004**
(21) Anmeldenummer: 99958104.4
(22) Anmeldetag: 22.11.1999
(51) Int. Cl.: F16D 55/28, F16D 59/02, F16D 66/02, F16D 65/46

(54) **WASSERDICHTE BREMSE**
WATERTIGHT BRAKE
FREIN ETANCHE A L'EAU

(30) Priorität: 20.11.1998 DE 29820821 U
(43) Veröffentlichungstag der Anmeldung: 05.09.2001
(73) Patentinhaber: Pintsch Bamag Antriebs- und Verkehrstechnik GmbH, 46537 Dinslaken (DE)
(72) Erfinder: SCHLEHBUSCH, Karl-Heinz, D-46535 Dinslaken (DE); GÄRTNER, Burkhard, D-46537 Dinslaken (DE)
(74) Vertreter: Grünecker, Kinkeldey, Stockmair & Schwanhäusser Anwaltssozietät
(86) Internationale Anmeldenummer: PCT/EP1999/008981
(87) Internationale Veröffentlichungsnummer: WO 2000/031431

(56) Entgegenhaltungen:
- DD-A- 148 250
- DE-U- 29 820 814
- FR-A- 2 319 232
- FR-A- 2 605 155
- GB-A- 2 302 574
- US-A- 2 620 901
- US-A- 4 181 201
- US-A- 4 445 596
- PATENT ABSTRACTS OF JAPAN vol. 009, no. 179 (M-399), 24. Juli 1985 (1985-07-24) & JP 60 049137 A (HITACHI), 18. März 1985 (1985-03-18)

## Beschreibung

Die Erfindung betrifft eine Bremse mit einer Sockelplatte, mit der eine Bremsbetätigungseinrichtung und mindestens eine Bremsscheibe im Wesentlichen drehstarr verbunden sind, mit einer Reibbelagscheibe, die mit einer relativ zur Sockelplatte drehbaren Eingangswelle im Wesentlichen drehstarr verbunden ist, und mit einem Gehäuse, wobei das Gehäuse als glockenförmige Haube ausgebildet ist, die sich dichtend an der Sockelplatte abstützt und die einen gegenüber einer äußeren Umgebung der Bremse zumindest wasserdicht abgedichteten Bremseninnenraum bildet, in dem die Bremsbetätigungseinrichtung, die Reibbelagscheibe und die Bremsscheibe aufgenommen sind, wobei die Bremse bei abgenommener Haube funktionsfähig ausgestaltet ist.

Derartige Bremsen sind aus dem Stand der Technik bekannt und werden beispielsweise für außen- und innenbelüftete Motoren bei Fahr-, Katz- und Hubwerken an Krananlagen verwendet. Die Sockelplatte ist dabei mit einem relativ zur Eingangswelle feststehenden Gegenstand, beispielsweise einem Motorgehäuse verbunden. Die Eingangswelle ist mit dem Abtrieb des Motors verbunden und dreht sich relativ zur Sockelplatte.

Aus dem Stand der Technik, beispielsweise aus der DD-PS 148 250 und der FR 2 319 232, sind Bremsen bekannt, die beispielsweise für außen- und innenbelüftete Motoren bei Fahr-, Katz- und Hubwerken an Kranantagen verwendet werden. Die Sockelplatte ist dabei mit einem relativ zur Eingangswelle feststehenden Gegenstand, beispielsweise einem Motorgehäuse verbunden. Die Eingangswelle ist mit dem Abtrieb des Motors verbunden und dreht sich relativ zur Sockelplatte.

Eine weitere Bremse ist aus der JP 60-49137 bekannt. Die dort gezeigte und beschriebene Bremse weist eine Betätigungseinrichtung sowie zwei Bremsscheiben auf, wobei zwischen den Bremsscheiben eine Reibbelagscheibe sowie ein Federelement angeordnet ist. Die Bremse der JP 60-49137 weist weiter eine Haube auf, die die Bremsscheiben umgibt und mit der Befestigungseinrichtung verbunden ist.

Durch Aktivieren der Bremsbetätigungseinrichtung wird bei den bekannten Bremsen die Reibbelagscheibe mit der Bremsscheibe in Eingriff gebracht. Durch die Reibung zwischen der sich mit der Eingangswelle drehenden Reibbelagscheibe und der Bremsscheibe wird die Drehung der Eingangswelle relativ zur Sockelplatte abgebremst und/oder zum Stillstand gebracht.

Herkömmliche Bremsen haben jedoch den Nachteil, dass sie nur schwer zu warten sind. Bei der Wartung müssen oft mehrere Gehäuseteile umständlich von der Bremse abgenommen werden und die Bremse stillgelegt werden. Außerdem verschleißen die Bremsscheiben und die Reibbelagscheiben herkömmlicher Bremsen gerade bei Krananlagen im Hafenbereich oder auf Schiffen sehr schnell.

Der vorliegenden Erfindung liegt daher die Aufgabe zugrunde, eine Bremse zu schaffen, die verglichen mit herkömmlichen Bremsen, leichter zu warten ist und eine höhere Verschleißfestigkeit aufweist.

Erfindungsgemäß wird diese Aufgabe für eine Bremse der eingangs genannten Art dadurch gelöst, dass eine manuelle Ausrückeinrichtung mit einem Hebel vorgesehen ist, wobei der Hebel an der Haube an zumindest einem wasserdicht abgedichteten Lager schwenkbar gelagert ist.

Die erfindungsgemäße Ausgestaltung der Bremse hat den Vorteil, dass sie aufgrund des glockenförmigen Gehäuses leichter zu warten ist als herkömmliche Bremsen. In dem glockenförmigen Gehäuse sind mit der Bremsbetätigungseinrichtung, der Reibbelagscheibe und der Bremsscheibe alle wesentlichen Bauteile der Bremse angeordnet, die einem Verschleiß unterliegen können und/oder regelmäßig gewartet werden müssen. Bei Abnahme der glockenförmigen Haube sind diese Bauteile frei zugänglich. Die Bremse bleibt trotz abgenommener Haube funktionsfähig, da die Bremsbetätigungseinrichtung, die Bremsscheibe und die Reibbelagscheibe mit der Sockelplatte verbunden sind. Auf diese Weise kann die Funktion der Bremse bei Wartungsarbeiten leicht überprüft werden.

Gleichzeitig kann bei der erfindungsgemäßen Bremse kein Wasser in den Bremseninnenraum dringen, da sich die Haube dichtend an der Sockelplatte abstützt. Dadurch wird der Verschleiß der Bremse erheblich gesenkt. Eine Oxidation der Bauteile im Bremseninnenraum, die durch den im Bremseninnenraum bleibenden Abrieb der Bremsscheibe begünstigt wird, kann nicht mehr stattfinden. Die Bauteile im Bremseninnenraum bleiben auch bei extrem feuchter und aggressiver Umgebung trocken. Die Lebensdauer der Bremse wird so gerade bei Krananlagen im Hafenbereich, die dem aggressiven Seewasser ausgesetzt sind, erhöht.

Um bei festgefressener Bremse beispielsweise nach einer Dauerbremsung und Verschweißen der Bremsscheibe und der Reibbelagscheibe die Bremse noch lüften zu können, ist die gegenüber der Haube bewegliche manuelle Ausrückeinrichtung vorgesehen, die in eine Ausrückstellung überführbar ist. Dabei ist in der Ausrückstellung die Bremse gelüftet. Die manuelle Ausrückeinrichtung ist mechanisch und/oder hydraulisch mit der Bremsscheibe und/oder der Reibbelagscheibe verbunden. Durch Betätigung der manuellen Ausrückeinrichtung wird die Bremsscheibe von der Reibbelagscheibe gelöst. Vorzugsweise ist die von der manuellen Ausrückeinrichtung auf die Bremsscheibe und/oder Reibbelagscheibe aufgebrachte Kraft größer als die von der Bremsbetätigungseinrichtung die aufgebrachte Kraft, so dass bei einer Fehlfunktion der Bremsbetätigungseinrichtung die (WO S.4) Bremse durch die manuelle Ausrückeinrichtung gelüftet werden kann.

Eine besonders ergonomische Handhabung ergibt sich dabei, wenn die manuelle Ausrückeinrichtung als Hebel ausgebildet ist, der an der Haube an zumindest einem Lager schwenkbar gelagert ist. Durch einen Hebel lassen sich große Kräfte zum Lüften in die Bremse einleiten, ohne dass ein hoher konstruktiver Aufwand betrieben werden muss.

Um zu vermeiden, dass durch das Lager Wasser oder andere korrosive Medien in den Bremseninnenraum gelangen, ist das Lager wasserdicht abgedichtet. Durch ein Lagerdichtungselement kann auch eine luftdichte und/oder wasserdichte Abdichtung erfolgen.

In einer vorteilhaften Ausgestaltung der Erfindung kann zwischen der Sockelplatte und der Haube ein Dichtungselement angeordnet sein. Diese Weiterbildung führt zu geringen Herstellkosten, da auf präzise aufeinanderliegende und fluchtende Dichtungsflächen von Sockelplatte und Haube verzichtet werden kann. Derartige Dichtungsflächen müssen hohen Toleranzanforderungen genügen. Dagegen sind Dichtungselemente leicht einzusetzen und gleichen Unregelmäßigkeiten in den sich abstützenden Flächen von Sockelplatte und Haube aus. Insbesondere kann dieses Dichtungselement als O-Ring ausgebildet sein.

Die Haube kann in einer weiteren vorteilhaften Ausgestaltung mit der Bremsbetätigungseinrichtung verbunden sein. Bei dieser Ausführung brauchen an der Sockelplatte keine Befestigungseinrichtungen für die Haube vorgesehen werden.

Die Sockelplatte kann als eine dichte Platte ausgebildet sein, die keinerlei Öffnungen aufweist, durch die Flüssigkeit in den Bremsinnenraum gelangen kann. Ist die Bremsbetätigungseinrichtung und/oder die Bremsscheibe mit der Sockelplatte verbunden, so ergibt sich eine Bauweise, bei der die Haube leicht von der Bremse lösbar ist und der Betrieb der Bremse bei abgenommener Haube auf eine besonders einfache Weise sichergestellt ist. Dabei ist darauf zu achten, dass die Bremsscheibe gegenüber der Sockelplatte axial verschieblich ist, um das Einrücken und Ausrücken (Lüften) der Bremse zu ermöglichen.

In einer weiteren vorteilhaften Ausgestaltung kann vorgesehen sein, dass sich die Lagerpunkte von Bremsscheibe und/oder Bremsbetätigungseinrichtung ausschließlich an der Sockelplatte befinden. In diesem Fall verbleiben bei einem Lösen der Haube die Bremsscheibe und/oder die Bremsbetätigungseinrichtung an der Sockelplatte. Dies führt ebenfalls zu einer sehr einfachen konstruktiven Ausgestaltung der Haube und zu einer Wartungsmöglichkeit der Bremse bei abgenommener Haube.

An die Eingangswelle können weitere Geräte, wie beispielsweise Tachometerwellen. angeschlossen werden, wenn in einer weiteren vorteilhaften Ausgestaltung der Bremse an einer Außenseite der Haube ein zur Eingangswelle im wesentlichen koaxialer Flansch mit einer zur Eingangswelle koaxialen Durchgangsöffnung angeformt ist. Der koaxiale Flansch ermöglicht die Befestigung der zusätzlichen Geräte an der Haube. Die koaxiale Durchgangsöffnung erlaubt die Verlängerung der Eingangswelle durch die Bremse hindurch.

Da die Reibbelagscheibe einem Abrieb unterliegt und demzufolge verschleißt, ist es notwendig, die Dicke der Reibbelagscheibe in beispielsweise regelmäßigen Wartungsintervallen zu überprüfen. Außerdem kann sich im Bremseninnenraum Schwitzwasser bilden, das von Zeit zu Zeit abgelassen werden muss. Für diese Zwecke kann in einer weiteren vorteilhaften Ausgestaltung der Bremse eine durchgängige Wartungsöffnung vorgesehen sein, die mit einem Verschlusselement luftdicht und/oder wasserdicht verschließbar ist. Die Wartungsöffnung kann dabei am Umfang der Haube in radialer Richtung relativ zur Eingangswelle angeordnet sein. Durch den radialen Verlauf der Öffnung läuft bei untenliegender Wartungsöffnung Schwitzwasser selbstständig ab. Außerdem kann durch die Wartungsöffnungen die Dicke der Reibbelagsscheibe und der Bremsscheibe inspiziert werden. Wartungsöffnungen, die parallel zur Eingangswelle verlaufen sind, können zum manuellen Lüften der Bremse sowie als Schwitzwasser-Ablassbohrung bei senkrechten Einbaulagen vorteilhaft sein. Zweckmäßigerweise ist die Wartungsöffnung als Gewindebohrung ausgebildet, die durch eine Verschlussschraube vorzugsweise wasser- oder luftdicht verschlossen ist. Die Verschlussschraube kann Dichtungselemente, wie beispielsweise O-Ringe aufweisen, die zu einem besonders dichten Verschluss der Gewindebohrung führen.

Eine besonders belastbare Lagerung der manuellen Ausrückeinrichtung an der Haube ergibt sich, wenn in einer weiteren vorteilhaften Ausgestaltung zwei Lager an zwei einander bezüglich der Eingangswelle einander im wesentlichen gegenüberliegenden Positionen der Haube vorgesehen sind. Mit dieser Ausgestaltung können auch sehr große Kräfte in die Bremse eingeleitet werden, ohne dass die Gefahr einer Beschädigung der Lager besteht.

Bei Verschleiß der Reibbelagscheibe wird diese dünner und das Spiel der Bremse ändert sich. Um das Bremsmoment bei dünner werdender Reibbelagscheibe konstant zu halten, kann in einer weiteren Ausgestaltung die eine Bremsscheibe zwischen einer in axialer Richtung beweglichen Einstelleinrichtung und einem in axialer Richtung verschieblichen Abstandhalter in axialer Richtung gehalten sein. Durch entsprechendes Verschieben von Einstelleinrichtung und Abstandhalter in axialer Richtung wird die Bremsscheibe in axialer Richtung versetzt und das Bremsenspiel eingestellt. Um die Bremse leichter lüften zu können, ist es dabei von Vorteil, wenn die zwischen der Einstelleinrichtung und dem Abstandhalter gehaltene Bremsscheibe im wesentlichen axial fixiert ist.

Eine leichte Einstellung des Bremsenspiels bei abgenommener Haube ist insbesondere dann möglich, wenn in einer weiteren vorteilhaften Ausgestaltung die Einstelleinrichtung und/oder der Abstandshalter mit der Befestigungseinrichtung und/oder der Sockelplatte verbunden sind. Auf diese Weise sind Abstandshalter und Einstelleinrichtung nicht mit der Haube verbunden und bei einer Einstellung des Bremsenspiels muß die Bremse nicht auseinandergebaut werden.

Ein platzsparender und einfacher Aufbau der Bremse ergibt sich, wenn die Einstelleinrichtung koaxial zum Abstandshalter ausgebildet ist, wobei vorzugsweise die Einstelleinrichtung im wesentlichen als Schraube und der Abstandshalter im wesentlichen als Hülse, in der die Einstelleinrichtung aufgenommen ist, ausgebildet sind.

Der Abstandshalter läßt sich bei abgenommener Haube ohne Abbau der Bremsscheibe besonders leicht verstellen, wenn die Hülse zumindest im Bereich zwischen den Bremsscheiben mit einem Außensechskant versehen ist.

Die Ausgestaltung der Bremse mit Einstelleinrichtung und Abstandhalter ist unabhängig vom Gesichtspunkt einer wasserdichten Abdichtung des Bremseninnenraums vorteilhaft, so daß für diese Ausgestaltung unabhängiger Schutz begehrt wird.

Des weiteren kann in einer vorteilhaften Ausgestaltung zum manuellen Ausrücken der Bremse ein axial bewegliches Ausrückmittel vorgesehen sein, durch welches die eine Bremsscheibe in Richtung weg von der anderen Bremsscheibe bewegbar und die Bremse dadurch ausrückbar ist, wobei bei abgenommener anderer Bremsscheibe und/oder Reibbelagscheibe die eine Bremsscheibe zumindest mittelbar durch das Ausrückmittel an der Sockelplatte gehalten ist. Damit erfüllt das Ausrückmittel eine Doppelfunktion, in dem es sowohl zum Lüften der Bremse als auch als Wartungshilfe dient, durch die die eine Bremsscheibe bei Wartungsarbeiten an der Bremse gehalten wird und nicht von der Bremse abmontiert werden muß.

Die Ausgestaltungen der Bremse mit Ausrückmittel und Ausrückeinrichtung zum manuellen Ausrücken der Bremse ist unabhängig vom Gesichtspunkt einer wasserdichten Abdichtung des Bremseninnenraums vorteilhaft, so daß für diese Ausgestaltung ebenfalls unabhängiger Schutz begehrt wird.

In einer weiteren vorteilhaften Ausgestaltung kann die Bremse eine elektronische Überwachungseinrichtung aufweisen, die vorzugsweise innerhalb der Haube angeordnet ist und durch die ein Signal ausgebbar ist, das für die Funktion und/oder den Verschleiß der Bremse repräsentativ ist. Diese elektronische Überwachungseinrichtung kann beispielsweise in Form eines Mikroschalters und/oder in Form eines Näherungsschalters ausgebildet sein. Der Mikroschalter ist ebenso wie der Näherungsschalter in der Lage, das Einrücken der Bremse zu registrieren oder bei Unterschreiten einer Mindestdicke der Reibbelagscheibe ein Signal auszugeben. Dieses Signal kann beispielsweise zu Wartungszwecken benötigt werden, um ohne Zugriff auf die Bremse feststellen zu können, wann die Reibbelagscheibe oder die Bremsscheibe ausgewechselt werden müssen.

Im folgenden wird die Erfindung anhand zweier Ausführungsbeispiele unter Zuhilfenahme der Zeichnungen beispielhaft erläutert.

Es zeigen:
- Fig. 1: ein erstes Ausführungsbeispiel der erfindungsgemäßen Bremse in einer Ansicht auf eine Stirnseite der Haube;
- Fig. 2: einen Querschnitt entlang der Linie II - 11 der Fig. 1
- Fig. 3: einen Querschnitt durch eine Ausrückeinrichtung gemäß dem ersten Ausführungsbeispiel
- Fig. 4: ein zweites Ausführungsbeispiel der erfindungsgemäßen Bremse in einer Stimansicht auf die Haube;
- Fig. 5: eine Schnittansicht des zweiten Ausführungsbeispiels der erfindungsgemäßen Bremse in einem Schnitt entlang einer Mittelachse der Bremse;
- Fig. 6: eine Einzelheit A der Fig. 3 im Querschnitt.

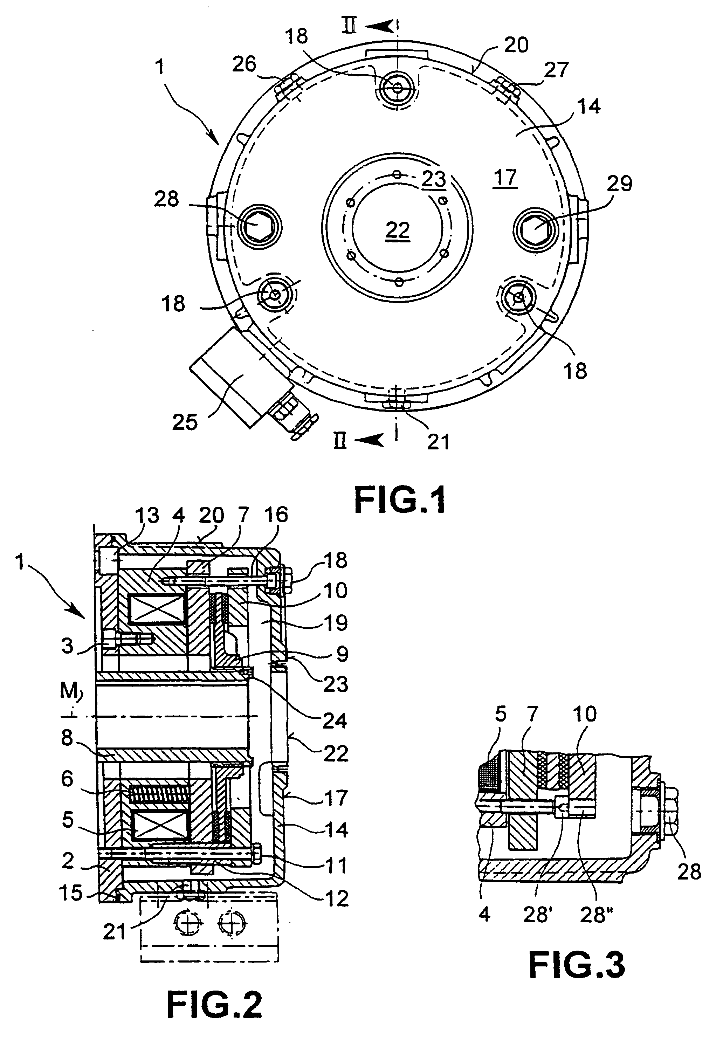

Zunächst wird der Aufbau des ersten Ausführungsbeispiel der erfindungsgemäßen Bremse anhand der Fig. 2 beschrieben, die einen Schnitt entlang der Linie II-II der Fig. 1 darstellt.

Die Bremse 1 weist eine Sockelplatte 2 auf, an der über mehrere am Umfang verteilte Schrauben 3 eine Bremsbetätigungseinrichtung 4 befestigt ist. Die Bremsbetätigungseinrichtung 4 weist einen Elektromagneten 5 und ein als Druckfeder ausgestaltetes Federelement 6 auf. Die Druckfeder 6 stützt sich zwischen der Bremsbetätigungseinrichtung 4 und einer Bremsscheibe 7 ab.

Die Bremse 1 weist des weiteren eine Eingangswelle 8 auf, die mit einer Keilverzahnung drehfest mit einer Reibbelagscheibe 9 verbunden ist, deren Durchmesser kleiner als der der Bremsscheibe 7 ist.

Die Reibbelagscheibe 9 ist zwischen der einen Bremsscheibe 7 und einer weiteren Bremsscheibe 10 angeordnet und dank der Keilverzahnung in axialer Richtung auf der Eingangswelle 8 verschiebbar. Die Bremsscheiben 7, 10 sind ebenfalls in axialer Richtung der Bremse auf drei am Umfang verteilten Schrauben 11 verschiebbar. Die Bremsscheiben 7, 10 weisen nicht denselben Durchmesser auf.

Die Bremsbetätigungseinrichtung 4, die beiden Bremsscheiben 7, 10 und die Reibbelagscheibe 9 verlaufen koaxial zueinander und zu einer Mittellinie M der Eingangswelle 8, die gleichzeitig die Mittellinie der Bremse 1 bildet.

Die Schraubenköpfe der Schrauben 11 dienen gleichzeitig als axialer Anschlag zum Einstellen des Spiels der Bremse. Die Schrauben 11 reichen durch die Bremsscheibe 7 und die Bremsbetätigungseinrichtung 4 hindurch und sind mit der Sockelplatte 2 verschraubt. Zu diesem Zweck ist die Bremsbetätigungseinrichtung 4 mit einer entsprechenden Durchgangsöffnung für jede Schraube 11 versehen, die zu den Bremsscheiben 7, 10 hin einen Gewindeabschnitt mit größerem Durchmesser aufweist. Im Gewindeabschnitt der Bremsbetätigungseinrichtung 4 ist eine Hülse 12 angeordnet, die durch die erste Bremsscheibe 7 hindurchreicht. Da die zweite Bremsscheibe 10 mit einer kleineren Öffnung versehen ist, stützt sich die Hülse 12 in axialer Richtung an der zweiten, äußeren Bremsscheibe 10 ab.

Die Hülse 12 weist an dem in Richtung der Sockelplatte 2 gelegenem Abschnitt ein Außengewinde auf, das in den Gewindeabschnitt der Betätigungseinrichtung 4 eingeschraubt ist. Der an die Bremsscheibe 10 stoßende Abschnitt der Hülse 12 ist als Sechskant ausgebildet. In der entsprechenden Durchgangsöffnung in der Bremsscheibe 7 ist die Hülse 12 mit leichtem Spiel gehalten, so daß sie einerseits drehbar gehalten ist und andererseits die Bremsscheibe 7 in Umfangsrichtung abzustützen vermag.

Die Gewindebohrung zur Aufnahme der Schraube 11 in der Sockelplatte 2 ist im ersten Ausführungsbeispiel durchgängig gezeichnet, sie kann aber auch als Sackloch ausgebildet sein, wodurch die der Bremsbetätigungseinrichtung 4 und den Bremsscheiben 7, 10 abgewandte Rückseite der Sockelplatte 2 abgedichtet wird.

Die Rückseite der Sockelplatte 2 ist gewöhnlicherweise an einem Elektromotor (nicht gezeigt) befestigt, dessen Motorwelle beispielsweise über eine Paßfeder die Eingangswelle 8 der Bremse 1 antreibt. Zur Befestigung der Bremse 1 an dem Elektromotor sind an der Sockelplatte 2 Befestigungsöffnungen 13 zur Aufnahme von entsprechenden Schrauben vorgesehen. Über die Sockelplatte 2 wird das Bremsmoment an das Gehäuse des Elektromotors geleitet.

Um die Sockelplatte 2 dicht auszugestalten, kann auch die Befestigungsöffnung 13 verschließbar oder als Sackloch ausgebildet sein. Auch das Gewindeloch für die Schraube 3, die die Sockelplatte 2 mit der Bremsbetätigungseinrichtung 4 verbindet, kann als Sackloch ausgestaltet sein.

Die Bremsbetätigungseinrichtung 4, die beiden Bremsscheiben 7, 10 und die Reibbelagscheibe 9 sind in einer glockenförmigen Haube 14 aufgenommen, die sich an der Sockelplatte 2 dichtend abstützt. Um die Dichtungswirkung zu verstärken, ist zwischen der Sockelplatte 2 und der Haube 14 ein O-Ring 15 als Dichtungselement angeordnet. Die Haube 14 ist über drei am Umfang verteilte Schrauben 16 mit der Bremsbetätigungseinrichtung 4 verschraubt und damit mittelbar mit der Sockelplatte 2 verbunden Die Schrauben 16 reichen in axialer Richtung außerhalb des Elektromagneten 5 durch die beiden Bremsscheiben 7, 10 hindurch. Die Schrauben 16 liegen auf demselben Durchmesser wie die Schrauben 11. Zusätzlich nehmen die Schrauben 11 einen Teil des Bremsmoments auf und leiten es über die Befestigungseinrichtung 4 in die Sockelplatte 2 ab.

Die Schraubenköpfe der Schrauben 16 liegen in Aussparungen an der Stirnfläche 17 der Haube. Diese Aussparungen weisen ein Innengewinde auf, in das Verschlußschrauben 18 eingeschraubt sind. Diese Verschlußschrauben dichten die Aussparungen in der Haube und die dahinter gelegenen Durchgangsöffnungen für die Schrauben 16 ab.

Aufgrund der Dichtung 15 und der Verschlußschrauben 18 ist somit der Bremseninnenraum 19, in dem die Bremsbetätigungseinrichtung 4, die Bremsscheiben 7, 10 und die Reibbelagscheibe 9 aufgenommen sind, bei an einen Elektromotor geschraubter Bremse 1 abgedichtet.

An der sich axial erstreckenden Umfangsfläche 20 der Haube sind radial verlaufende Wartungsöffnungen vorgesehen, die durch Schrauben 21 wasser- und luftdicht verschlossen sind. Dazu sind die Schrauben 21 mit Dichtungen versehen.

Die in der Fig. 2 dargestellte Verschlußschraube 21 ist in der gezeigten Einbaulage unten angeordnet. Die von ihr verschlossene Wartungsöffnung dient als Schwitzwasserablaß.

Das erste Ausführungsbeispiel der Bremse 1 weist eine koaxial zur Mittellinie M der Bremse verlaufende Durchgangsöffnung 22 auf, die von einem Flanschabschnitt 23 umgeben ist.

Ebenso weist die Eingangswelle 8 an ihrem von der Sockelplatte 2 und den Elektromotor weg weisendem Ende Befestigungseinrichtungen 24 auf, an denen eine weitere Welle befestigt werden kann, die durch die Öffnung 22 hindurchreicht. An dieser Welle kann beispielsweise ein Tachometer (nicht gezeigt) angebracht werden. Am Flansch 23 kann ein Übergangsflansch für eine wasserdichte Verbindung der Bremse mit einem Tachometergehäuse angebracht werden. Zu diesem Zweck ist der Flanschabschnitt 23 plan bearbeitet, so daß eine leichte Abdichtung dieser Fläche möglich ist.

In der Fig. 2 ist gestrichelt ein Klemmenkasten 25 dargestellt, der zum wasserdichten Anschluß der Betriebskabei für den Elektromagneten 5 und weiterer elektrischer Einrichtungen zur Verschleißüberwachung wie beispielsweise Näherungsschaltern (nicht dargestellt) dient.

Fig. 1 zeigt eine haubenseitige Stirnansicht der Bremse 1. Hier ist zu erkennen, daß der Klemmenkasten 25 mit den Kabelaufnahmen in der gezeigten Einbaulage seitlich versetzt zum Schwitzwasserablaß 21 ist. Des weiteren sind an der Umfangsfläche 20 der Haube 14 zwei weitere Wartungsöffnungen vorgesehen, die mit Verschlußschrauben 26, 27 wasser- und luftdicht verschlossen sind. Diese beiden Wartungsöffnungen sind in axialer Richtung auf Höhe der Reibbelagscheibe 9 angeordnet und dienen als Inspektionsöffnungen zur Kontrolle des Abriebs der Reibbelagscheibe 9.

Zwei weitere, einander diametral gegenüberliegende Wartungsöffnungen an der Stimseite 17 der Haube 2 sind ebenfalls durch Verschlußschrauben 28, 29 wasser- und luftdicht verschlossen. Diese Öffnungen dienen als Zugangsöffnungen zu einer manuellen Lüftungseinrichtung, die in der Fig. 3 zu sehen ist. Die Bremsscheiben 7, 10 sind mit zwei weiteren Durchgangsöffnungen versehen, deren Lage der durch die Verschlußschrauben 28, 29 verschlossenen Wartungsöffnungen entspricht. Zwischen Betätigungselement 4 und der ersten Bremsscheibe 7 sind hinter diesen Durchgangsöffnungen Schrauben 28' angebracht, die durch die Wartungsöffnungen 28, 29 zugänglich sind. Bei abgenommenen Verschlußschrauben 28, 29 kann beispielsweise ein Schraubenschlüssel durch die Wartungsöffnungen und die Öffnungen der Bremsscheiben 7, 10 gesteckt werden und die Schrauben 28' ein- oder herausgeschraubt werden.

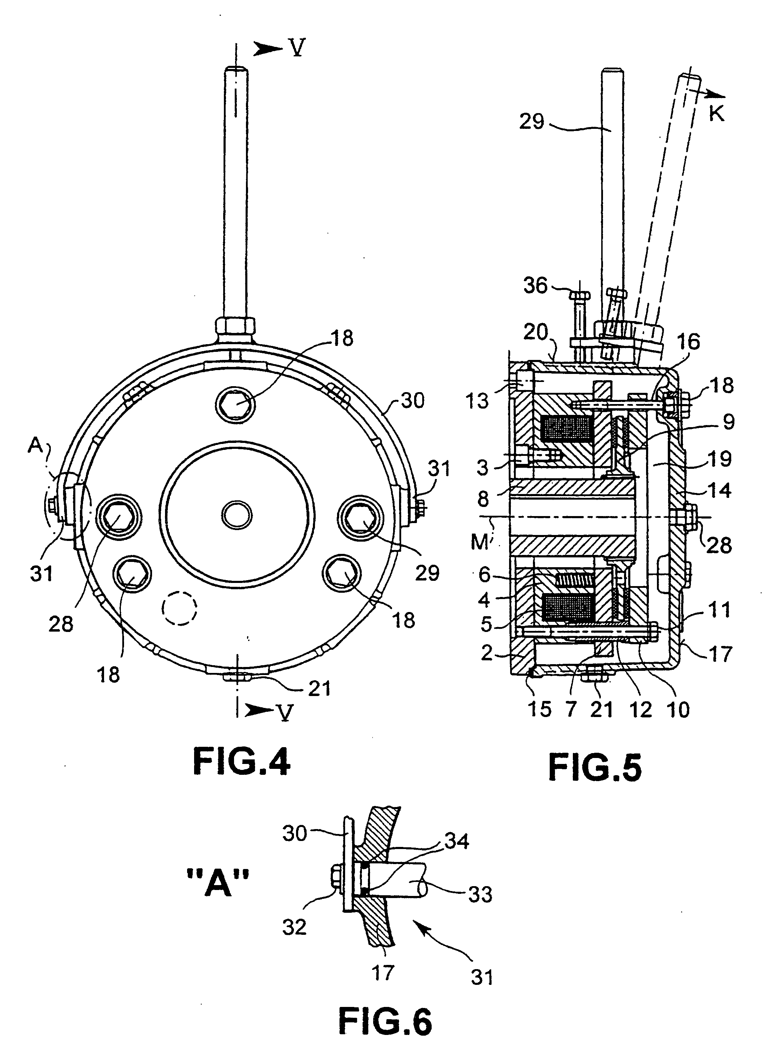

Im folgenden wird der Aufbau des zweiten Ausführungsbeispiel anhand der Fig. 4 bis 6 beschrieben.

Beim zweiten Ausführungsbeispiel sind die Bauteile, die in ihrer Funktion den Bauteilen des ersten Ausführungsbeispiels entsprechen, mit den gleichen Bezugszeichen versehen. Auf die Erläuterung dieser Bauteile wird bei der Beschreibung des zweiten Ausführungsbeispiels verzichtet. Das zweite Ausführungsbeispiel sieht im Gegensatz zum ersten Ausführungsbeispiel nicht vor, eine weitere Welle zum Anschluß weiterer Geräte an die Eingangswelle 8 anzuschließen. Deswegen weist die Haube 2 des zweiten Ausführungsbeispiels keinen Flansch 23 und keine Öffnung 22 auf. Die Eingangswelle 8 weist keine Befestigungsmöglichkeit 24 auf.

Statt dessen ist die Stirnfläche 17 der Haube 2 mit einer koaxial zur Mittellinie M verlaufenden Wartungsöffnung 28 versehen, die als Schwitzwasserablaß 28 bei einer senkrechten Einbaulage dient. Diese Wartungsöffnung 28 ist ebenfalls durch eine Verschlußschraube wasser- und luftdicht verschlossen.

Des weiteren weist das zweite Ausführungsbeispiel eine manuelle Ausrückeinrichtung in Form eines Hebels 29 auf, der über eine Gabel 30, die die Umfangsfläche 20 der Haube teilweise umfaßt, an zwei Lagern 31 in axialer Richtung der Bremse 1 schwenkbar gelagert ist. Eines der beiden Lager 31 ist als Einzelheit A in der Fig. 6 im Schnitt dargestellt. Die Lager 31 sind wasserdicht ausgestaltet , so daß durch sie kein Wasser in den Bremseninnenraum 19 dringen kann.

Die Gabel 30 ist mit einer Welle 33 drehstarr über einen durch eine Schraube 32 gesicherten Formschluß verbunden. Dieser Formschluß wird durch einen am Ende der Welle angebrachten Außensechskant erreicht, der in einen entsprechenden Innensechskant des Hebels 30 greift. Die Schraube 32 sichert diese Verbindung in axialer Richtung der Welle 33. Durch Drehung der Welle 33 wird die Kupplung gelüftet, also die Reibbelagscheibe 9 von der ersten Bremsscheibe 7 weggedrückt. Dies kann beispielsweise durch eine Exzentereinrichtung oder einen Hebel an einem Ende der Welle geschehen, wodurch die Bremsscheibe 7 gegen die Wirkung der Federn 6 in Richtung der Betätigungseinrichtung bewegt wird.

Zwischen der Welle 33 und der Haube 17 ist ein Dichtelement 34, in diesem Fall ein O-Ring, angeordnet. Durch das Dichtelement 34 sind die Lager 31 gegen das Eindringen von Wasser in den Bremseninnenraum 19 abgedichtet.

Durch eine Kraft K, die auf dem Hebel 29 wirkt, kann dieser in axialer Richtung verschwenkt werden. Eine am Hebel 29 in einer Mutter gehaltene Schraube 36 stützt sich am Umfang 20 der Bremse 1 ab und dient als Anschlag. Die Schraube 36 dient des weiteren zur Fixierung des Hebels 29 in der Ausrückstellung, die in der Fig. 4 gestrichelt dargestellt ist. In der Ausrückstellung ist die Bremse 1 gelüftet. Außerdem kann durch Niederschrauben der Schraube 36 der Hebel 29 mit größerer Kraft in die Ausrückstellung bewegt werden.

Im folgenden wird die Funktion der erfindungsgemäßen Bremse geschildert.

Bei ausgeschalteten Elektromagneten 5 drückt die Druckfeder 6 die Bremsscheibe 7 gegen die Reibbelagscheibe 9, die aufgrund ihrer axialen Verschieblichkeit auf der Eingangswelle 8 gegen die in axialer Richtung durch die Schraube 11 und Hülse 12 fixierte Bremsscheibe 10 gedrückt wird. Der Bremsmomentenfluß bei der Bremse verläuft zum einen bei der Bremsscheibe 7 über die Hülse 12 und die Betätigungseinrichtung 4 zur Sockelplatte 2 und über diese zum Gehäuse des Elektromotors. Zum anderen wandert der Bremsmomentenfluß von der Bremsscheibe 10 über die Hülse 12 ebenfalls über die Betätigungseinrichtung 4 und die Sockelplatte 2 zum Gehäuse des Elektromotors.

Beim Einschalten des Elektromagneten 5 (es können auch mehrere Elektromagnete vorgesehen sein) wird die Bremsscheibe 7 durch die Wirkung des Magnetfeldes in Richtung der Betätigungseinrichtung 4, also entgegen der Kraftrichtung der Feder 6, gezogen. Da die Bremsscheibe 10 in axialer Richtung fixiert ist, kann diese der Bewegung der Bremsscheibe 7 nicht folgen, so daß beim Einschalten des Elektromagneten 5 die Bremse gelüftet wird.

Durch Lösen der Verschlußschrauben 18 sind die Schrauben 16 an der Stirnfläche 17 der Haube 2 zugänglich und können gelöst werden. Damit ist die Haube 14 von der Sockelplatte 2 lösbar. Die Bremsscheiben 7, 10 sind jedoch auch bei abgenommener Haube 14 mit der Betätigungseinrichtung 4 und der Sockelplatte 2 über die Schrauben 3 und der Hülse 12 verbunden. Damit ist die Bremse 1 auch bei abgenommener Haube 14 voll funktionsfähig und leicht zu warten. Eine wasserdichte Abdichtung des Bremseninnenraums 19, die bei entsprechender, dem Fachmann bekannter Abänderung der Dichtungen auch luftdicht ausgeführt sein kann, wird durch die Dichtungen 15 und durch die wasserdichten Verschlußschrauben 18, 21, 26, 27, 28, 29 an der Haube erreicht.

Weist die Sockelplatte 2 anstelle von Durchgangsöffnungen nur Sacklöcher auf, so kann durch die erfindungsgemäße Bremse ohne weitere Maßnahmen eine Dichtigkeit erreicht werden, die Drücken bis 1 mWS standhält. Dies entspricht der Schutzklasse IP 67. Die erfindungsgemäße Bremse ist damit korrosionsbeständig im See- und Tropenbereich. In den Bremseninnenraum 19 sind damit insbesondere Schutzvorkehrungen feuchtigkeitsempfindliche Bauteile einbaubar. Dies sind beispielsweise elektronische Überwachungseinrichtungen, die die Dicke der Bremsscheiben zwischen den Bremsscheiben 7, 10 und/oder der Reibbelagscheibe 9 oder das Einrücken der Bremse 1 überwachen. Diese Überwachungseinrichtungen sind beispielsweise Mikroschalter oder Näherungsschalter.

Reicht die vom Elektromagneten 5 ausgeübte Magnetkraft beispielsweise bei festgefressener Reibbelagscheibe 9 nicht mehr zum Lüften der Bremse 1 aus, so kann die Bremse 1 beim ersten Ausführungsbeispiel durch die in der Fig. 3 gezeigte manuelle Lüftung gelüftet werden. Normalerweise stützt sich die Schraube 28', wie in der Fig. 3 gezeigt, im so weit als möglich herausgeschraubten Zustand an der Bremsscheibe 10 ab, so daß sie im Betrieb der Bremse 1 fest sitzt. Hierzu weist die mit der Schraube 28' fluchtende Bohrung 28" der Bremsscheibe 10 zweckmäßigerweise einen kleineren Durchmesser auf als der Schraubenkopf der Schraube 28'. Zum manuellen Lüften wird zunächst die Verschlußschraube 28 gelöst und dann ein Schraubenschlüssel durch die Wartungsöffnung und die Öffnung 28" gesteckt und die Schraube 28' in Richtung der Bremsscheibe 7 in die Befestigungseinrichtung 4 eingeschraubt. Auf diese Weise wird die Bremsscheibe 7 in Richtung der Befestigungseinrichtung entgegen der Federwirkung der Federn 6 bewegt und die Bremse manuell gelüftet.

Die Schraube 28' hält bei einer Wartung der Bremse 1 außerdem die Bremsscheibe 7 gegen den Federdruck der Federn 6 an der Betätigungseinrichtung 4. Damit sind nach dem Lösen der Schrauben 16 und 11 die Bremsscheibe 10 und die Reibbelagscheibe 9 schnell und wartungsfreundlich abnehmbar, da sie nicht mehr unter der Wirkung der Federkraft stehen.

Beim zweiten Ausführungsbeispiel wird die Bremse durch Betätigung des Hebels 29 gelüftet. Dazu wird der Hebel in axialer Richtung weg von der Sockelplatte 2 gedrückt.

Auch wenn eine manuelle Ausrückeinrichtung 29, 30, 31 vorgesehen ist, kann aufgrund der abgedichteten Lager 31 eine Wasserfestigkeit bis 1 mWS, also eine Schutzklasse IP 67, erreicht werden. Trotz der Schutzklasse ist aufgrund der glockenförmigen Haube 14 und der Anordnung der Bauteile der Bremse 1 auf der Sockelplatte 2 eine leichte Wartung möglich, ohne daß dazu die Bremse 1 vom Elektromotor abmontiert oder die Bremse 1 auseinandergebaut muß bzw. die Bremsscheiben 7, 10 oder die Bremsbetätigungseinrichtung 4 von der Sockelplatte 2 und die Reibbelagscheibe 9 von der Eingangswelle 8 abgenommen werden müssen.

Der Abrieb der Reibbelagscheibe 9 wird durch axiales Verschieben der Bremsscheibe 10 mittels der Hülse 12 und der Schraube 11 so ausgeglichen, daß das Spiel der Bremse 1 im wesentlichen konstant bleibt. Dazu wird bei abgenommener Haube 17 zunächst die Hülse 12 weiter in die Befestigungseinrichtung geschraubt. Die Hülse 12 dient in Richtung der Betätigungseinrichtung 17 als Anschlag in eine axiale Richtung. Verschiebt man diesen Anschlag in Richtung der Betätigungseinrichtung bzw. in Richtung der Reibbelagscheibe, so wandert die Bremsscheibe 10 näher zur anderen Bremsscheibe 7 und der Spalt zwischen den beiden Bremsscheiben wird verkleinert. Auf diese Weise wird das ursprüngliche Bremsenspiel wiederhergestellt und der Abrieb der Reibbelagscheibe 9 ausgeglichen. Anschließend wird-die Schraube 11 nachgezogen, so daß die Bremsscheibe 10 fest zwischen der Hülse 12 und der Schraube 11 eingeklemmt ist. Der Außensechskant der Hülse 12 im Bereich des Spaltes zwischen den beiden Bremsscheiben 7, 10 erleichtert das Einschrauben der Hülse 12. Zum Nachstellen des Spiels der Bremse muß wiederum nur die Haube 17 von der Bremse abgenommen werden.

Die beiden gezeigten Ausführungsbeispiele der Bremse 1 stellen jeweils eine Elektromagnet-Zweiflächen-Federdruckbremse dar, die üblicherweise für Bremsmomente zwischen 100 Nm und 1600 Nm ausgelegt ist. Die Sockelplatte ist als Normalflansch mit Durchmessern zwischen 200 mm und 800 mm ausgebildet. Die Haube 12 ist aus Gußeisen gefertigt. Die gezeigten Bremsen werden beispielsweise als Kranbremsen auf Schiffen und in Häfen eingesetzt.

## Patentansprüche

1. Bremse (1) mit einer Sockelplatte (2), mit der eine Bremsbetätigungseinrichtung und mindestens eine Bremsscheibe (10) im Wesentlichen drehstarr verbunden sind, mit einer Reibbelagscheibe (9), die mit einer relativ zur Sockelplatte drehbaren Eingangswelle (8) im Wesentlichen drehstarr verbunden ist, und mit einem Gehäuse, wobei das Gehäuse als glockenförmige Haube (14) ausgebildet ist, die sich dichtend an der Sockelplatte abstützt und die einen gegenüber einer äußeren Umgebung der Bremse zumindest wasserdicht abgedichteten Bremseninnenraum (19) bildet, in dem die Bremsbetätigungseinrichtung (4), die Reibbelagscheibe (9) und die Bremsscheibe (10) aufgenommen sind, wobei die Bremse (1) bei abgenommener Haube (14) funktionsfähig ausgestaltet ist, **dadurch gekennzeichnet, dass** eine manuelle Ausrückeinrichtung (29, 30, 31) mit einem Hebel (29) vorgesehen ist, wobei der Hebel an der Haube (14) an zumindest einem wasserdicht abgedichteten Lager (31) schwenkbar gelagert ist.

2. Bremse nach Anspruch 1, **dadurch gekennzeichnet, dass** zwischen Sockelplatte (2) und Haube (14) ein Dichtungselement (15) angeordnet ist.

3. Bremse nach Anspruch 2, **dadurch gekennzeichnet, dass** das Dichtungselement (15) als O-Ring ausgebildet ist.

4. Bremse nach einem der oben genannten Ansprüche, **dadurch gekennzeichnet, dass** die Bremsbetätigungseinrichtung (4) mit der Sockelplatte (2) verbunden ist.

5. Bremse nach einem der oben genannten Ansprüche, **dadurch gekennzeichnet, dass** die Bremsscheibe (7, 10) mit der Sockelplatte (2) axial verschieblich verbunden ist.

6. Bremse nach einem der oben genannten Ansprüche, **dadurch gekennzeichnet, dass** sich die Lagerpunkte (11) von Bremsscheibe (7, 10) und/oder Bremsbetätigungseinrichtung (4) ausschließlich an der Sockelplatte (2) befinden.

7. Bremse nach einem der oben genannten Ansprüche, **dadurch gekennzeichnet, dass** die Haube (14) mindestens eine durchgängige Wartungsöffnung (18, 21, 26, 27, 28, 29) aufweist, die mit einem Verschlusselement luftdicht und/oder wasserdicht verschließbar ist, wobei die Wartungsöffnung vorzugsweise am Umfang (20) der Haube (14) in radialer Richtung relativ zur Eingangswelle (8) angeordnet ist.

8. Bremse nach einem der oben genannten Ansprüche, **dadurch gekennzeichnet, dass** die Haube (14) mindestens eine durchgängige Wartungsöffnung aufweist, die mit einem Verschlusselement luftdicht und/oder wasserdicht verschließbar ist, wobei die Wartungsöffnung vorzugsweise parallel zur Eingangswelle (8) an einer Stirnfläche der Haube angeordnet ist.

9. Bremse nach einem der oben genannten Ansprüche, **dadurch gekennzeichnet, dass** die Wartungsöffnung als eine Gewindebohrung ausgebildet ist, die durch eine Verschlussschraube verschlossen ist.

10. Bremse nach einem der oben genannten Ansprüche, **dadurch gekennzeichnet, dass** die Bremse (1) eine gegenüber der Haube (14) bewegliche, manuelle Ausrückeinrichtung (29, 30, 31) aufweist, die in eine Ausrückstellung überführbar ist, in der die Bremse (1) gelüftet ist.

11. Bremse nach einem der oben genannten Ansprüche, **dadurch gekennzeichnet, dass** die manuelle Ausrückeinrichtung (29, 30, 31) einen Hebel (29) aufweist, der an der Haube (14) an zumindest einem Lager (31) schwenkbar gelagert ist.

12. Bremse nach einem der Ansprüche 10 und 11, **dadurch gekennzeichnet, dass** zwischen dem Hebel (29) und dem Lager (31) eine Gabel (30) vorgesehen ist. die die Haube (14) zumindest teilweise umgreift.

13. Bremse nach Anspruch 12, **dadurch gekennzeichnet, dass** zwei Lager (31) an zwei einander bezüglich der Eingangswelle (8) im Wesentlichen gegenüberliegenden Positionen der Haube (14) vorgesehen sind.

14. Bremse nach Anspruch 12 oder 13, **dadurch gekennzeichnet, dass** die eine Bremsscheibe (10) zwischen einer in axialer Richtung beweglichen Einstelleinrichtung (11) und einem in axialer Richtung verschieblichen Abstandshalter (12) in axialer Richtung gehalten ist.

15. Bremse nach einem der oben genannten Ansprüche 12 bis 14, **dadurch gekennzeichnet, dass** die Einstelleinrichtung (11) und/oder der Abstandshalter (12) mit der Befestigungseinrichtung (4) und/oder der Sockelplatte (2) verbunden ist.

16. Bremse nach einem der oben genannten Ansprüche, **dadurch gekennzeichnet, dass** die Einstelleinrichtung (11) koaxial zum Abstandshalter (12) ausgebildet ist.

17. Bremse nach Anspruch 16, **dadurch gekennzeichnet, dass** die Einstelleinrichtung (11) im wesentlichen als Schraube und der Abstandshalter (12) im wesentlichen als Hülse, in der die Einstelleinrichtung (11) aufgenommen ist, ausgebildet sind.

18. Bremse nach einem der oben genannten Ansprüche, **dadurch gekennzeichnet, dass** die Hülse (12) zumindest im Bereich zwischen den Bremsscheiben (7, 10) mit einem Außensechskant versehen ist.

19. Bremse nach einem der oben genannten Ansprüche, **dadurch gekennzeichnet, dass** zum manuellen Ausrücken der Bremse (1) ein axial bewegliches Ausrückmittel (28') vorgesehen ist, durch welches die eine Bremsscheibe (7) in Richtung weg von der anderen Bremsscheibe (10) bewegbar und die Bremse (1) ausrückbar ist, wobei bei entfernter anderer Bremsscheibe (10) und/oder Reibbelagscheibe (9) die eine Bremsscheibe (7) zumindest mittelbar durch das Ausrückmittel (28') an der Sockelplatte (2) gehalten ist.

20. Bremse nach einem der oben genannten Ansprüche, **dadurch gekennzeichnet, dass** die Bremse (1) eine elektronische Überwachungseinrichtung aufweist, die vorzugsweise innerhalb der Haube angeordnet ist, und durch die ein Signal ausgebbar ist, das für die Funktion und/oder den Verschleiß der Bremse repräsentativ ist.

21. Bremse nach einem der oben genannten Ansprüche, **dadurch gekennzeichnet, dass** die elektronische Überwachungseinrichtung einen Mikroschalter und/oder einen Näherungsschalter aufweist.

22. Bremse nach einem der oben genannten Ansprüche, **dadurch gekennzeichnet, dass** die Bremsbetätigungseinrichtung (4) mindestens einen Elektromagneten (5) aufweist, dessen Magnetfeld auf die Bremsscheibe (7) wirkt und bei dessen Aktivierung die Bremse ausrückbar ist.

23. Bremse nach einem der oben genannten Ansprüche, **dadurch gekennzeichnet, dass** die Bremsbetätigungseinrichtung (4) mindestens ein Federelement (6) aufweist, das sich zwischen der Sockelplatte (2) und der Bremsscheibe (7) abstützt und durch das die Bremsscheibe (7, 10) und die Reibbelagscheibe zusammen gedrückt sind.

24. Bremse nach einem der oben genannten Anspruche, **dadurch gekennzeichnet, dass** die Bremse als Elektromagnet-Zweiflächen-Federdruckbremse ausgebildet ist.

## Claims

1. A brake (1) comprising a base plate (2) having connected thereto a brake actuating device and at least one brake disk (10) in essentially non-rotatable fashion, a friction lining disk (9) connected in essentially non-rotatable fashion to an input shaft (8) which is rotatable relative to said base plate, and a housing designed as a bell-shaped shroud (14) which is sealingly supported on said base plate and forms an interior brake space (19) sealed at least in water-tight fashion relative to an outer environment of said brake and accommodating said brake actuating device (4), said friction lining disk (9) and said brake disk (10), with said brake (1) being made operational in a removed condition of said.. shroud (14), **characterized in that** a manual disengagement device (29, 30, 31) is provided with a lever (29), said lever being supported on said shroud (14) in a pivotable manner on at least one water-tightly sealed support (31).

2. A brake according to claim 1, **characterized in that** a sealing element (15) is positioned between said base plate (2) and said shroud (14).

3. A brake according to claim 2, **characterized in that** said sealing element (15) is formed as an O-ring.

4. A brake according to any one of the aforementioned claims, **characterized in that** said brake actuating device (4) is connected to said base plate (2).

5. A brake according to any one of the aforementioned claims, **characterized in that** said brake disks (7, 10) are connected to said base plate (2) in an axially displaceable manner.

6. A brake according to any one of the aforementioned claims, **characterized in that** support points (11) of said brake disks (7, 10) and/or of said brake actuating device (4) are located exclusively on said base plate (2).

7. A brake according to any one of the aforementioned claims, **characterized in that** said shroud (14) has at least one continuous maintenance opening (18, 21, 26, 27, 28 29) which can be locked in an air-tight and/or water-tight manner by means of a sealing element, said maintenance opening being preferably positioned on a circumference (20) of said shroud (14) in a radial direction in relation to said input shaft (8).

8. A brake according to any one of the aforementioned claims, **characterized in that** said shroud (14) has at least one continuous maintenance opening, which can be locked by means of a sealing element in an air-tight and/or water-tight manner, said maintenance opening being preferably positioned in parallel to said input shaft (8) on a frontal surface of said shroud.

9. A brake according to any one of the aforementioned claims, **characterized in that** said maintenance opening is formed as a threaded boring which is sealed by means of a sealing screw.

10. A brake according to any one of the aforementioned claims, **characterized in that** said brake (1) comprises a manual disengagement device (29, 30, 31) movable relative to said shroud (14), which can be moved into a disengagement position in which said brake (1) is released.

11. A brake according to any one of the aforementioned claims, **characterized in that** said manual disengagement device (29, 30, 31) has a lever (29) which is pivotably supported on said shroud (14) on at least one support (31).

12. A brake according to any one of claims 10 and 11, **characterized in that** a bracket (30) which at least partially encompasses said shroud (14) is provided between said lever (29) and said support (31).

13. A brake according to claim 12, **characterized in that** two supports (31) are provided on two positions of said shroud (14) essentially opposite to one another in relation to said input shaft (8).

14. A brake according to claim 12 or 13, **characterized in that** said one brake disk (10) is held in the axial direction between an adjusting device (11) movable in the axial direction and a spacer (12) displaceable in the axial direction.

15. A brake according to any one of the aforementioned claims 12 to 14, **characterized in that** said adjusting device (11) and/or said spacer (12) is connected to said attachment device (4) and/or said base plate (2).

16. A brake according to any one of the aforementioned claims, **characterized in that** said adjusting device (11) is formed coaxial to said spacer (12).

17. A brake according to claim 16, **characterized in that** said adjusting device (11) is essentially formed as a screw, and said spacer (12) is essentially formed as a sleeve in which said adjusting device (11) is accommodated.

18. A brake according to any one of the aforementioned claims, **characterized in that** said sleeve (12) is provided with an external hexagon at least in the area between said brake disks (7, 10).

19. A brake according to any one of the aforementioned claims, **characterized in that** an axially movable disengagement device (28') is provided for the manual disengagement of said brake (1), whereby said one brake disk (7) can be moved away from said other brake disk (10) and said brake (1) can disengage, and further whereby, when said other brake disk (10) and/or said friction lining disk (9) have been removed, said one brake disk (7) is at least indirectly held on said base plate (2) by means of said disengagement device (28').

20. A brake according to any one of the aforementioned claims, **characterized in that** said brake (1) comprises an electronic monitoring device which is preferably positioned inside said shroud and by which a signal that represents the function and/or the wear of said brake can be emitted.

21. A brake according to any one of the aforementioned claims, **characterized in that** said electronic monitoring device comprises a micro-switch and/or a proximity switch.

22. A brake according to any one of the preceding claims, **characterized in that** said brake actuating device (4) has at least one solenoid (5), the magnetic field of which acts upon said brake disk (7) so that said brake can be disengaged upon the actuation of the same.

23. A brake according to any one of the aforementioned claims, **characterized in that** said brake actuating device (4) has at least one spring element (6) which is supported between said base plate (2) and said second brake disk (7) and by which said brake disks (7, 10) and said friction lining disk are pressed together.

24. A brake according to any one of the preceding claims, **characterized in that** said brake is formed as an electromagnetic two-surface spring pressure brake.

## Revendications

1. Frein (1) comportant un plaque de socle (2), à laquelle un dispositif d'actionnement de frein et au moins un disque de frein (10) sont reliés de manière essentiellement fixe en rotation, un disque à garniture de friction (9), qui est relié de manière essentiellement fixe en rotation à un arbre d'entrée (8) capable de tourner par rapport à ladite plaque de socle, et un logement, le logement étant réalisé sous la forme d'un capot en forme de cloche (14), qui s'appuie de manière étanche sur ladite plaque de socle et qui forme un volume interne de frein (19) qui est étanchéifié de manière au moins étanche à l'eau par rapport à un environnement extérieur du frein et dans lequel ledit dispositif d'actionnement de frein (4), ledit disque à garniture de friction (9) et ledit disque de frein (10) sont disposés, ledit frein (1) étant conformé de manière à pouvoir fonctionner lorsque le capot (14) est ôté, **caractérisé en ce qu'**un dispositif de débrayage manuel (29, 30, 31) comportant un levier (29) est prévu, ledit levier étant disposé sur le capot (14) de manière à pouvoir pivoter sur au moins un palier (31) étanchéifié de manière étanche à l'eau.

2. Frein suivant la revendication 1, **caractérisé en ce qu'**un élément d'étanchéité (15) est disposé entre ladite plaque de socle (2) et ledit capot (14).

3. Frein suivant la revendication 2, **caractérisé en ce que** ledit élément d'étanchéité (15) est réalisé sous la forme d'un joint torique.

4. Frein suivant l'une des revendications précédentes, **caractérisé en ce que** ledit dispositif d'actionnement de frein (4) est relié à ladite plaque de socle (2).

5. Frein suivant l'une des revendications précédentes, **caractérisé en ce que** lesdits disques de frein (7, 10) sont reliés à la plaque de socle (2) d'une manière axialement déplaçable.

6. Frein suivant l'une des revendications précédentes, **caractérisé en ce que** les points de support (11) desdits disques de frein (7,10) et/ou dudit dispositif d'actionnement de frein (4) se trouvent exclusivement sur la plaque de socle (2).

7. Frein suivant l'une des revendications précédentes, **caractérisé en ce que** ledit capot (14) présente au moins une ouverture d'entretien passante (18, 21, 26, 27, 28, 29) qui peut être obturée par un élément de fermeture d'une manière étanche à l'air et/ou à l'eau, ladite ouverture d'entretien étant, de préférence, disposée sur la circonférence (20) dudit capot (14) dans une direction radiale par rapport à ledit arbre d'entrée (8).

8. Frein suivant l'une des revendications précédentes, **caractérisé en ce que** ledit capot (14) présente au moins une ouverture d'entretien passante qui peut être obturée par un élément de fermeture d'une manière étanche à l'air et/ou à l'eau, ladite ouverture d'entretien étant disposée sur une surface frontale dudit capot, de préférence parallèlement à l'arbre d'entrée (8).

9. Frein suivant l'une des revendications précédentes, **caractérisé en ce que** ladite ouverture d'entretien est réalisée sous la forme d'un alésage fileté qui est fermé par une vis de fermeture.

10. Frein suivant l'une des revendications précédentes, **caractérisé en ce que** ledit frein (1) présente un dispositif de débrayage manuel (29, 30, 31) qui est déplaçable par rapport audit capot (14) et qui peut être transféré dans une position de débrayage dans laquelle le frein (1) est desserré.

11. Frein suivant l'une des revendications précédentes, **caractérisé en ce que** le dispositif de débrayage manuel (29, 30, 31) présente un levier (29) qui est disposé sur ledit capot (14) de manière à pouvoir pivoter sur au moins un palier (31).

12. Frein suivant l'une des revendications précédentes 10 et 11, **caractérise en ce que**, entre ledit levier (29) et ledit palier (31), il est prévu une fourche (30) qui entoure au moins partiellement ledit capot (14).

13. Frein suivant la revendication 12, **caractérisé en ce que** deux paliers (31) sont prévus en deux positions dudit capot (14) qui sont essentiellement opposées l'une à l'autre par rapport à l'arbre d'entrée (8).

14. Frein suivant l'une des revendications 12 et 13, **caractérisé en ce que** ledit disque de frein (10) est maintenu en direction axiale entre un dispositif d'ajustement (11) mobile en direction axiale et un élément d'écartement (12) déplaçable en direction axiale.

15. Frein suivant l'une des revendications précédentes 12 à 14, **caractérisé en ce que** ledit dispositif d'ajustement (11) et/ou ledit élément d'écartement (12) sont reliés audit dispositif de fixation (4) et/ou à ladite plaque de socle (2).

16. Frein suivant l'une des revendications précédentes, **caractérisé en ce que** ledit dispositif d'ajustement (11) est réalisé coaxial à ledit élément d'écartement (12).

17. Frein suivant la revendication 16, **caractérisé en ce que** ledit dispositif d'ajustement (11) est réalisé essentiellement sous la forme d'une vis et **en ce que** ledit élément d'écartement (12) est réalisé essentiellement sous la forme d'une douille dans laquelle ledit dispositif d'ajustement (11) est disposé.

18. Frein suivant l'une des revendications précédentes, **caractérisé en ce que** ladite douille (12) est, au moins dans la zone entre les disques de frein (7,10), pourvue d'un hexagone mâle.

19. Frein suivant l'une des revendications précédentes, **caractérisé en ce que**, pour le débrayage manuel dudit frein (1), il est prévu un moyen de débrayage axialement mobile (28') par lequel ledit disque de frein (7) peut être déplacé dans une direction opposée à le dite autre disque de frein (10) et ledit frein (1) peut être débrayé, ledit disque de frein (7) étant au moins indirectement maintenu sur ladite plaque de socle (2) par ledit moyen de débrayage (28') lorsque ledit autre disque de frein (10) et/ou ledit disque à gamiture de friction (9) sont écartés.

20. Frein suivant l'une des revendications précédentes, **caractérisé en ce que** ledit frein (1) présente un dispositif de surveillance électronique qui est de préférence disposé à l'intérieur dudit capot et par lequel un signal peut être émis qui est représentatif du fonctionnement et/ou de l'usure dudit frein.

21. Frein suivant l'une des revendications précédentes; **caractérisé en ce que** ledit dispositif de surveillance électronique présente un microcommutateur et/ou un commutateur de proximité.

22. Frein suivant l'une des revendications précédentes, **caractérisé en ce que** ledit dispositif d'actionnement de frein (4) présente au moins un solénoïde (5) dont le champ magnétique agit sur ledit disque de frein (7) et lors de l'activation duquel ledit frein peut être débrayé.

23. Frein suivant l'une des revendications précédentes, **caractérisé en ce que** ledit dispositif d'actionnement de frein (4) présente au moins un élément de ressort (6) qui s'appuie entre ladite plaque de socle (2) et ledit disque de frein (7) et par lequel ledit disque de frein (7,10) et ledit disque à garniture de friction sont pressés ensemble.

24. Frein suivant l'une des revendications précédentes, **caractérisé en ce que** ledit frein est réalisé sous la forme d'un frein sous pression de ressort à deux faces et à solénoïde.
